# EUROPÄISCHE PATENTSCHRIFT

(11) **EP 2 646 296 B1**
(45) Veröffentlichungstag und Bekanntmachung des Hinweises auf die Patenterteilung: **10.12.2014**
(21) Anmeldenummer: 11769872.0
(22) Anmeldetag: 13.10.2011
(51) Int. Cl.: B60T 1/10

(54) **VORRICHTUNG ZUM AUFNEHMEN UND ABGEBEN VON HYDRAULIKFLÜSSIGKEIT, INSBESONDERE FÜR EIN HYBRID- ODER ELEKTROFAHRZEUG, SOWIE BREMSSYSTEM FÜR EIN HYBRID- ODER ELEKTROFAHRZEUG**
DEVICE FOR RECEIVING AND DISPENSING HYDRAULIC FLUID, IN PARTICULAR FOR A HYBRID OR ELECTRIC VEHICLE, AND BRAKE SYSTEM FOR A HYBRID OR ELECTRIC VEHICLE
DISPOSITIF POUR RECEVOIR ET DISTRIBUER UN LIQUIDE HYDRAULIQUE, EN PARTICULIER POUR UN VÉHICULE HYBRIDE OU ÉLECTRIQUE, ET SYSTÈME DE FREINAGE POUR VÉHICULE HYBRIDE OU ÉLECTRIQUE

(30) Priorität: 01.12.2010 DE 102010062307
(43) Veröffentlichungstag der Anmeldung: 09.10.2013
(73) Patentinhaber: Robert Bosch GmbH, 70442 Stuttgart (DE)
(72) Erfinder: FOITZIK, Bertram, 74360 Ilsfeld (DE); NAGEL, Willi, 71686 Remseck/Hochdorf (DE)
(86) Internationale Anmeldenummer: PCT/EP2011/067881
(87) Internationale Veröffentlichungsnummer: WO 2012/072323

(56) Entgegenhaltungen:
- GB-A- 2 240 146
- US-A1- 2011 241 419

## Beschreibung

### Stand der Technik

Die vorliegende Erfindung betrifft eine Vorrichtung zum Aufnehmen und Abgeben von Hydraulikflüssigkeit, insbesondere für ein Hybrid- oder Elektrofahrzeug, sowie ein Bremssystem für ein Hybrid- oder Elektrofahrzeug.

Hybrid- oder Elektrofahrzeuge gewinnen Energie durch Bremsen mit Rekuperation zurück. Dabei wird beispielsweise ein elektrischer Antriebsmotor des Fahrzeugs generatorisch betrieben und die erzeugte elektrische Energie in einen Speicher, insbesondere einen Akkumulator, gespeist, welche dann bei Bedarf wieder abgerufen werden kann. Durch Rekuperation wird die Verlustleistung des Fahrzeugs beim Bremsen verringert und somit ist diese als Maßnahme zur Verbrauchs- und Emissionsverringerung geeignet.

Das rekuperative Bremsen stellt hohe Anforderungen an das Zusammenspiel der Komponenten des Bremssystems, welche ein reibungsbasiertes Bremsmoment erzeugen, und solchen Komponenten, welche ein rekuperatives Bremsmoment erzeugen. Denn das rekuperative Bremsmoment ist von einer Vielzahl von Faktoren abhängig: Beispielsweise steht bei vollem Akkumulator ein rekuperatives Bremsmoment nicht zur Verfügung, so dass das gesamte Bremsmoment durch reibungsbasiertes Bremsen aufgebracht werden muss. Weiterhin hängt das rekuperative Bremsmoment von der Drehzahl des Generators und damit von der Geschwindigkeit des Fahrzeugs ab, weshalb dieses nicht konstant ist. Beispielsweise steht bei geringen Drehzahlen so gut wie kein rekuperatives Bremsmoment zur Verfügung. Weiterhin darf sich auch in dem Fall kein verlängerter Bremsweg ergeben, dass ein rekuperatives Bremsen nicht möglich ist, weil beispielsweise eine Komponente ausgefallen ist.

Das rekuperative Bremsmoment kann entweder stets additiv zum bestehenden reibungsbasierten Bremsmoment genutzt werden, oder das rekuperative Bremsmoment und das reibungsbasierte Bremsmoment werden derart gesteuert, dass deren Summe immer dem aktuellen Fahrerbremswunsch entspricht. Letzterer Ansatz wird als CRBS (Englisch: Corporative Regenerative Break System) bezeichnet.

Es sind verschiedene Ansätze zur Umsetzung von CRBS in Verbindung mit Pedalkraftsimulatoren und Fremdkraftbremssystemen bekannt. Diese gewährleisten eine vollständige oder teilweise Entkopplung der auf den Fahrer mittels des Bremspedals rückwirkenden Kräfte, welche sich aufgrund der mit der Rekuperation verbundenen Druckänderungen (Bremsdruckmodulationen) in dem Bremssystem ergeben. Insbesondere jedoch in dem Fall, dass CRBS in Verbindung mit herkömmlichen Bremskraftverstärkern, beispielsweise einem Unterdruckbremskraftverstärker, verwendet werden soll, ist es deutlich schwieriger, den Druck in dem Bremssystem so zu steuern, dass der Fahrer keinerlei Rückwirkungen am Bremspedal im Rekuperationsbetrieb des Bremssystems spürt. Problematisch ist, dass die Rückwirkungen den Fahrer verunsichern können.

Aus der Druckschrift DE 10 2007 030 441 A1 ist eine Vorrichtung gemäß dem Oberbegriff des Patentanspruchs 1 bekannt.

Die Offenlegungsschrift GB2240146 offenbart ein Druckabbauventil welches erste und zweite Ventilsätze aufweist, die jeweils die Kommunikation zwischen entsprechenden Einlass und Auslasskammern des Druckabbauventils steuern. Bremsdruckreaktionskolben der jeweiligen Ventilsätze werden durch eine gemeinsame Kompressionsfeder auseinander gehalten.

Die bekannte Vorrichtung weist einen Zylinder, einen Kolben, welcher für das Aufnehmen und Abgeben von Hydraulikflüssigkeit in dem Zylinder bewegbar ist, sowie eine Antriebseinrichtung in Form eines Elektromotors auf. Der Elektromotor ist mittels einer Gewindespindel mit dem Kolben für das Bewegen desselben gekoppelt. Der bekannten Vorrichtung kommt die Aufgabe zu, in einem Hybrid- oder Elektrofahrzeug dem Fahrer unabhängig davon, ob eine Rekuperation stattfindet, ein konstantes Pedalgefühl am Bremspedal bereitzustellen.

### Vorteile der Erfindung

Die in dem Anspruch 1 definierte Vorrichtung und das in dem Anspruch 9 definierte Bremssystem sind vergleichsweise kompakt und lassen sich günstig herstellen. Dies ist darin begründet, dass der zwischen der Stirnseite des Kolbens und der Stirnseite des Zahnrads angeordnete Rampenmechanismus sehr viel kürzer baut als die aus dem Stand der Technik bekannte Gewindespindel. Weiterhin lässt sich der erfindungsgemäße Rampenmechanismus im Vergleich zu der Gewindespindel einfacher herstellen.

Die in den jeweiligen Unteransprüchen aufgeführten Merkmale beziehen sich auf vorteilhafte Weiterbildungen und Verbesserungen des Gegenstands der Erfindung.

Mit "Rekuperation" ist vorliegend die Rückgewinnung von kinetischer Energie des Fahrzeugs in Form von elektrischer Energie während des Abbremsens eines Rads des Fahrzeugs gemeint.

### Kurze Beschreibung der Zeichnung

Ausführungsbeispiele der Erfindung sind in den Figuren der Zeichnung dargestellt und in der nachfolgenden Beschreibung näher erläutert.

Es zeigen:
- Figur 1: schematisch ein Bremssystem gemäß einem Ausführungsbeispiel der vorliegenden Erfindung; und
- Figur 2: eine Schnittansicht einer Vorrichtung gemäß einem Ausführungsbeispiel der vorliegenden Erfindung;
- Figur 3: einen Schnitt A-A aus Figur 2; und
- Figur 4: einen Schnitt B-B aus Figur 3.

### Ausführungsformen der Erfindung

In den Figuren bezeichnen gleiche Bezugsziffern gleiche oder funktionsgleiche Elemente, soweit nichts Gegenteiliges angegeben ist.

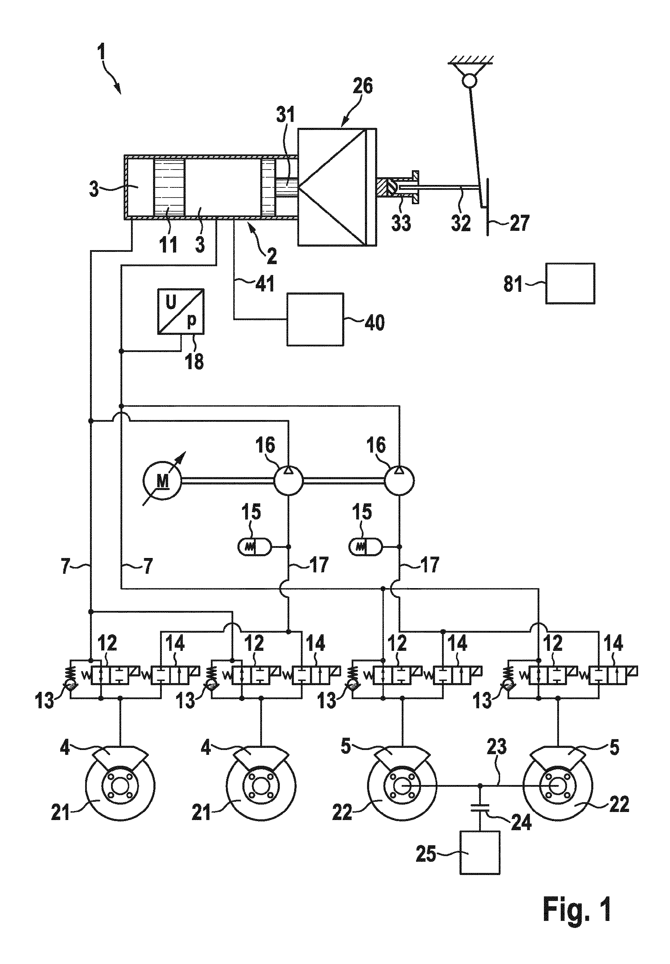

Fig. 1 zeigt schematisch ein Bremssystem 1 gemäß einem Ausführungsbeispiel der vorliegenden Erfindung.

Das Bremssystem 1, welches insbesondere als ein Hilfskraftbremssystem ausgebildet ist, wird bevorzugt bei einem nicht weiter dargestellten Hybrid- oder Elektrofahrzeug eingesetzt.

Das Bremssystem 1 weist einen Hauptbremszylinder 2 mit zwei Kammern 3 auf, welche jeweils mit zwei Radbremszylindern 4, 5 zum Abbremsen von Rädern 21 des Hybrid- oder Elektrofahrzeugs mittels Leitungen 7 hydraulisch verbunden sind. Der Hauptbremszylinder 2 ist bevorzugt ein Tandem Master Cylinder (TMC) mit einem Schwimmkolben 11. Jede der Leitungen 7 ist mittels eines Einlassventils 12 mit einem Radbremszylinder 4, 5 verbunden. Die Einlassventile 12 können als 2/2-Wegeventile ausgebildet sein, welche stromlos offen sind, wie in Fig. 1 gezeigt. Weiterhin sind Rückschlagventile 13 in parallel zu den Einlassventilen 12 vorgesehen. Jede der Leitungen 7 kann verzweigt ausgebildet sein, um zwei Radbremszylinder 4, 5 mit Hydraulikflüssigkeit zu versorgen.

Die Radbremszylinder 4 sind ferner - nachfolgende Ausführungen beziehen sich dem besseren Verständnis halber lediglich auf den in Fig. 1 links gezeigten Bremskreis, gelten aber genauso für den rechts dargestellten Bremskreis - mittels Auslassventilen 14, einem Niederdruckspeicher 15, einer Pumpe 16 und einer Leitung 17 mit der Kammer 3 verbunden. Die Auslassventile 14 können als 2/2-Wegeventile ausgebildet sein, welche stromlos geschlossen sind, wie in Fig. 1 gezeigt. Die Pumpe 16 fördert in einem Antiblockiermodus des Bremssystems 1 Hydraulikflüssigkeit in die Kammer 3. Der Druck in der Kammer 3 wird mittels eines Bremsdrucksensors 18 gemessen.

Während die Radbremszylinder 4 Rädern 21 einer nicht-angetriebenen Achse des Hybrid- oder Elektrofahrzeugs zugeordnet sind, sind die Radbremszylinder 5 zum Abbremsen von Rädern 22 an einer Antriebsachse 23 vorgesehen. Die Antriebsachse 23 ist beispielsweise von einem nicht-dargestellten Verbrennungsmotor antreibbar. Die Antriebsachse 23 ist mittels einer Kupplung 24 mit einem Generator 25 des Hybrid- oder Elektrofahrzeugs zum Aufladen eines nicht dargestellten Akkumulators koppelbar.

Das Bremssystem 1 weist ferner einen Bremskraftverstärker 26 auf, welcher eine vom Fahrer des Hybrid- oder Elektrofahrzeugs mittels eines Bremspedals 27 auf einen Kolben 31 des Hauptbremszylinders 2 aufgebrachte Fußkraft verstärkt. Mittels Betätigung des Kolbens 31 wir die Hydraulikflüssigkeit in den Kammern 3 unter Druck gesetzt. Ein beispielsweise zwischen der Pedalstange 32 und dem Bremskraftverstärker 26 angeordneter Pedal sensor 33 sensiert die vom Fahrer aufgebrachte Pedalkraft und damit dessen Bremswunsch.

Sensiert der Pedalsensor 33 einen Fahrerbremswunsch, so kann ein Teil der Bremsleistung von dem Generator 25 aufgebracht werden, welcher die dabei gewonnene Bremsenergie als elektrische Energie in den nicht dargestellten Akkumulator einspeist. Dazu wird der Generator 25 mittels der Kupplung 24 an die Antriebsachse 23 gekuppelt. Entsprechend muss nun aber der Druck der an den Radbremszylindern 5 anstehenden Hydraulikflüssigkeit abgebaut werden, um die Bremsleistung insgesamt konstant zu halten.

Dazu weist das Bremssystem 1 eine Vorrichtung 40 auf. Die Vorrichtung 40 ist mittels einer Leitung 41 mit einer der Kammern 3 hydraulisch verbunden. Dabei handelt es sich um eine direkte Verbindung mit der Kammer 3, das heißt ohne ein zwischengeschaltetes Trennventil. Dies im Unterschied zu dem eingangs erwähnten Stand der Technik DE 2007 030 441 A1.

Die Vorrichtung 40 dient dazu, Hydraulikflüssigkeit aus der Kammer 3 aufzunehmen oder an diese abzugeben.

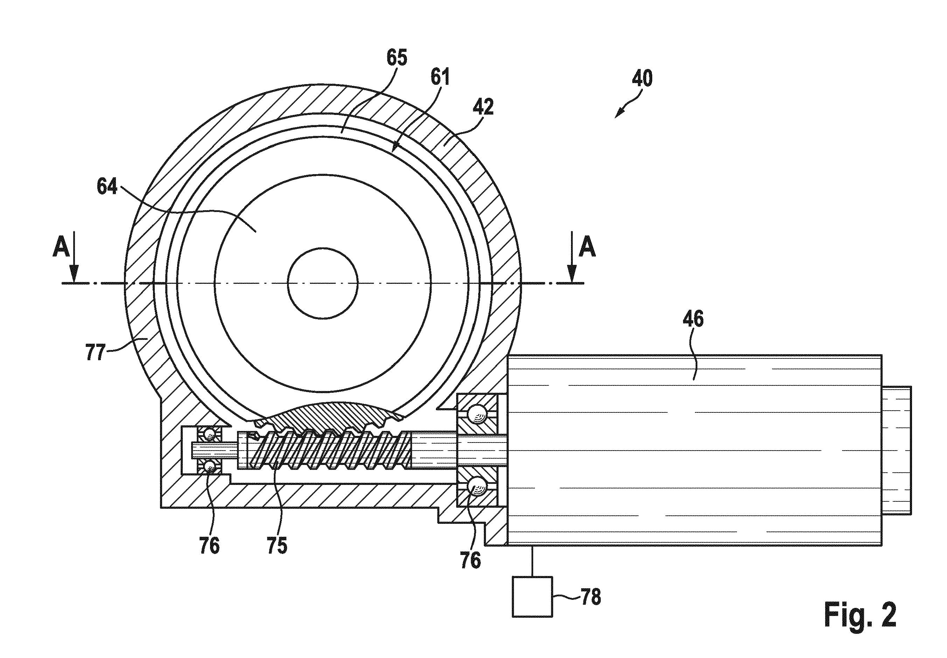

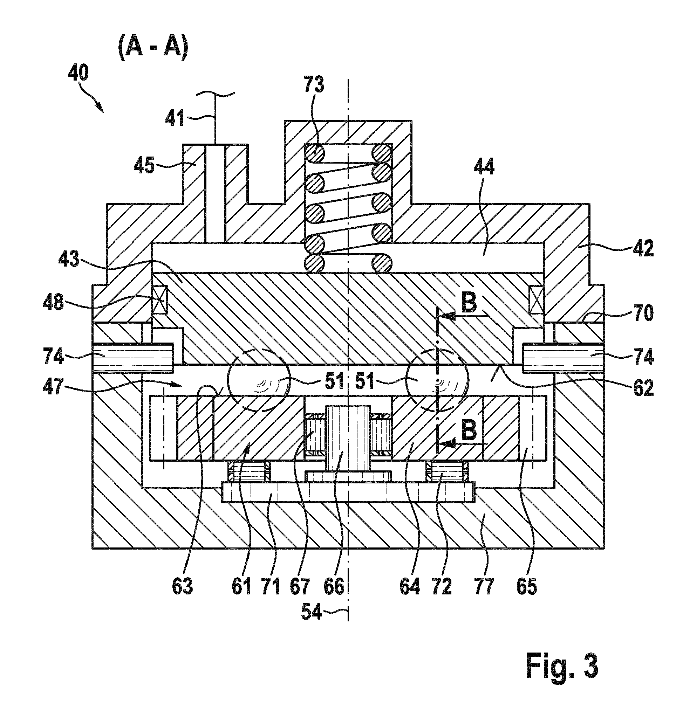

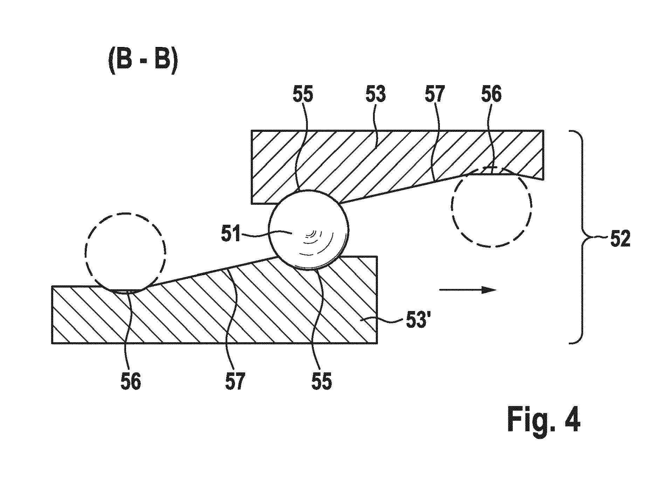

Die Vorrichtung 40 wird nachfolgend anhand der Figuren 2 bis 4 näher erläutert, wobei Figur 2 einen Schnitt durch die Vorrichtung 40, Figur 3 einen Schnitt A-A aus Figur 2 und Figur 4 einen Schnitt B-B aus Figur 3 zeigt.

Die Vorrichtung 40 weist einen Zylinder 42, siehe Figur 3, auf. In dem Zylinder 42 ist ein Kolben 43 für das Aufnehmen und Abgeben der Hydraulikflüssigkeit bewegbar vorgesehen. Der Kolben 43 bildet mit dem Zylinder 42 eine Kammer 44 für das erwähnte Aufnehmen und Abgeben der Hydraulikflüssigkeit. Die Kammer 44 ist mittels eines Anschlusses 45 mit der Leitung 41, siehe Figur 1, verbunden. Der Kolben 43 ist mittels einer Antriebseinrichtung 46 (siehe Figur 2), welche insbesondere als Elektromotor ausgebildet ist, bewegbar. Eine Kolbendichtung des Kolbens 43 ist in Figur 3 mit 48 bezeichnet und dichtet den Spalt zwischen dem Kolben 43 und dem Zylinder 42 ab.

Die Vorrichtung 40 weist weiterhin einen Rampenmechanismus 47 auf. Der Rampenmechanismus 47 weist bevorzugt drei Kugeln 51 (in den Figuren sind nur zwei der Kugeln 51 dargestellt) auf, welche jeweils zwischen einem Paar 52, siehe Figur 4, von Rampen 53, 53' abrollen. Figur 4 zeigt lediglich ein solches Rampenpaar 52 mit einer Kugel 51. Bevorzugt sind jedoch drei solcher Anordnungen, wie in Figur 4 dargestellt, um die Kolbenmittelachse 54, siehe Figur 3, herum angeordnet. Die drei Rampenpaare 52 weisen dabei einen Abstand von 120 Grad in Umfangsrichtung um die Mittelachse 54 zueinander auf.

Alternativ könnten auch lediglich zwei Rampenpaare 52 mit jeweils einer Kugel 51 verwendet werden. Die zwei Rampenpaare 52 wären dann um 180 Grad zueinander versetzt um die Kolbenmittelachse 54 anzuordnen. Hieraus ergäbe sich vorteilhaft ein größerer Schwenkwinkel der Rampen 53, 53' zueinander, wodurch wiederum der Hub des Kolbens 43 vergrößert werden könnte.

Jede der Rampen 53 weist zwei Mulden 55 und 56 auf. Die Mulden 55 sind einer ersten Stellung des Kolbens 43 zugeordnet. Diese erste Stellung des Kolbens entspricht einer solchen, in welcher der Zylinder 42 vollständig entleert ist, das heißt sämtliche Hydraulikflüssigkeit in die Kammer 3 des Hauptzylinders 2, siehe Figur 1, gedrückt ist. Die Mulden 56 entsprechen einer gestrichelt dargestellten Position der Kugel 51. In dieser Position der Kugel 51 befindet sich der Kolben 43 in einer zweiten Stellung, in welcher der Zylinder 42 mit Hydraulikflüssigkeit vollständig gefüllt ist.

Die Rampen 53 könnten weiterhin eine lediglich angedeutete Mulde 57 aufweisen, welche zwischen den Mulden 55 und 56 angeordnet ist. Die Mulde 57 ist für eine Funktionserweiterung der Vorrichtung 1 nutzbar, zum Beispiel zur Kompensation eines Lüftspiels bei "Zero Drag Caliper", also, wenn das Bremssystem 1 besondere Radbremszylinder für ein besonders niedriges Restbremsmoment vorsieht.

Der Rampenmechanismus 47 ist zwischen einer Stirnseite 62 des Kolbens 43 und einer Stirnseite 63 eines Zahnrads 61 der Vorrichtung 1 angeordnet. Die Rampen 53 können einstückig mit der Stirnseite 62 des Kolbens 43 gebildet sein. Das heißt, dass die Rampen 53 beispielsweise aus demselben Material und in einem Stück mit dem Kolben 43 gebildet sein können. Genauso gut können die Rampen 53 gemeinsam oder jeweils als ein Separatteil ausgebildet sein, welches mit dem Kolben 43 fest verbunden, beispielsweise verschraubt ist. Entsprechendes gilt für die Rampen 53', welche an der Stirnseite 63 des Zahnrads 61 angeordnet sind.

Das Zahnrad 61 weist bevorzugt ein zentrales Scheibenelement 64 auf, welches von einem Zahnkranz 65 bevorzugt aus Kunststoff umgeben ist. Dadurch, dass der Zahnkranz 65 bevorzugt aus Kunststoff hergestellt ist, wird ein geräuscharmer Lauf erzielt. Der Zahnkranz 65 ist bevorzugt auf das Scheibenelement 64 aufgespritzt. Damit ergibt sich eine einfache Herstellbarkeit für das Zahnrad 61. Alternativ kann der Zahnkranz 65 aus Metall hergestellt sein, welcher auf das Scheibenelement 64 aufgepresst wird. Der Zahnkranz 65 weist bevorzugt eine schräg verzahnte Stirnradverzahnung auf.

Das Zahnrad 61 ist bevorzugt auf einem Zapfen 66 mittels Wälzkörpern 67 radial in Bezug auf die Mittelachse 54 und mittels einer Anlagefläche 71 und Wälzkörpern 72 axial entlang der Mittelachse 54 gelagert. Die Anlagefläche 71 ist an einem sich über eine Trennstelle 70 an den Zylinder 42 anschließenden Gehäuse 77 angeordnet.

Eine Feder 73 drückt den Kolben 43 gegen die Kugeln 51, das Zahnrad 61, die Wälzkörper 72, die Anlagefläche 71 und schlussendlich gegen das Gehäuse 77. Dadurch wird sichergestellt, dass die Rampen 53, 53' stets gegen die Kugeln 51 anliegen.

Weiterhin ist eine Verdrehsicherung 74 vorgesehen, welche einerseits in das Gehäuse 77 und andererseits in den Kolben 43 eingreift, um ein Verdrehen des Kolbens 43 bei einer Betätigung desselben mittels des Rampenmechanismusses 47 zu verhindern.

Das Zahnrad 61 kämmt mit einem Schneckenrad 75, siehe Figur 2. Das Schneckenrad 75 ist bevorzugt aus Metall gebildet und an seinen gegenüberliegenden Enden mittels Lagern 76 in dem Gehäuse 77 gelagert. Das Gehäuse 77 und der Zylinder 42 bilden zusammen den Raum, in welchem der Kolben 43, das Zahnrad 61 und die vorstehend erwähnten, weiteren Komponenten der Vorrichtung 1 angeordnet sind.

Das Schneckenrad 75 wird von dem Elektromotor 46 angetrieben. Ein Rotorlagesensor 78, siehe Figur 2, erkennt die Lage des Rotors des Elektromotors 46, woraus sich auf den Befüllungsgrad des Zylinders 42 mit Hydraulikflüssigkeit schließen lässt. Alternativ könnte zur Bestimmung des genannten Befüllungsgrads auch die von dem Elektromotor 47 aufgenommene Leistung herangezogen werden, denn diese verändert sich, wenn die Kugeln 51 jeweils mit einer der Mulden 55, 56 in Eingriff geraten bzw. zwischen den Rampen 53, 53' entlangrollen. Außerdem können mit dem Rotorlagesensor 78 die Mulden 55, 56, 57 einfach aufgefunden werden.

Nachfolgend werden die Funktion und Vorteile der Vorrichtung 40 noch näher erläutert.

Aufgrund des verwendeten Rampenmechanismusses 47 lässt sich der Kolben 43 mit einem vergleichsweise großen Durchmesser ausbilden. Dadurch sinkt wiederum der Betätigungshub für den Kolben 43, welcher beispielsweise ca. 2-5 mm beträgt.

Die Verwendung des Rampenmechanismusses 47 in Verbindung mit dem Zahnrad 61 sowie dem Schneckenrad 75 resultiert in einem guten Wirkungsgrad von beispielsweise 80-90 %. Das heißt, ca. 80-90 % der von dem Elektromotor 46 aufgewendeten Arbeit kommt bei dem Kolben 43 an, und umgekehrt. Der gute Wirkungsgrad bringt den Vorteil eines geringen Energieverbrauchs des Elektromotors 46 mit sich.

Der gute Wirkungsgrad bedeutet jedoch auch, dass, wenn in der Kammer 44 ein hoher Druck herrscht, dies zu einem selbsttätigen Verstellen des Kolbens 43 führen würde. Daher kommt dem Rampenmechanismus 47 neben der Umwandlung der Drehbewegung des Zahnrads 64 in eine Hubbewegung des Kolbens 43 die Funktion zu, eine selbsttätige Verstellung des Kolbens 43 in bestimmten Stellungen desselben zu verhindern. Dazu weisen die Rampen 53 des Rampenmechanismusses 47 die Mulden 55, 56, 57 auf.

Befindet sich die Kugel 51 beispielsweise in der Mulde 55 ist der Zylinder 42 im Wesentlichen vollständig entleert. Der Kolben 43 befindet sich in seiner ersten Stellung (vgl. Fig. 3). Führt der Fahrer nun eine Vollbremsung in einem Zustand aus, in welchem das Bremssystem 1 nicht rekuperiert, steigt in der Druck in der Hydraulikleitung 41 und damit in der Kammer 44 stark an. Die Mulden 55 bewirken, dass dieser Druckanstieg bzw. der hohe Druck nicht zu einem selbsttätigen Bewegen des Kolbens 43 in Figur 3 nach unten führt, also derart dass das Volumen in der Kammer 44 vergrößert wird. Denn eine derartige Vergrößerung des Volumens der Kammer 44 würde den an den Radbremszylindern 4 anstehenden Bremsdruck nachteilig reduzieren. Ohne die Mulde 55 müsste der gesamte Gegendruck von dem Elektromotor 46 aufgebracht werden, was zu einer zu hohen Bestromung desselben führen würde. Mittels der Mulden 55 kann der Elektromotor 46 im nicht rekuperierenden Betrieb des Bremssystems 1 stromlos geschaltet werden.

Ein stromlos geschlossenes Trennventil, wie in dem einleitend erwähnten Stand der Technik beschrieben, wird daher vorliegend nicht benötigt, obwohl die Vorrichtung 40 den erwähnten guten Wirkungsgrad aufweist und nicht dauerhaft bestromt werden muss.

Erst wenn ein Bremsen mit einem rekuperativen Anteil erfolgt, wird der Elektromotor 46 bestromt, wodurch sich die Kugeln 51 aus den Mulden 55 herausbewegen. Dazu dreht sich die untere Rampe 53' in der in Figur 4 angedeuteten Pfeilrichtung gegenüber der oberen Rampe 53 und die Rückstellfeder 73 drückt den Kolben 43 in Figur 3 nach unten, so dass der Zylinder 42 Hydraulikflüssigkeit über die Leitung 41 aufnimmt. Der Elektromotor 46 wird dabei von einer Steuereinrichtung 81, siehe Figur 1, angesteuert, welche mit dem Drucksensor 18, siehe Figur 1, verbunden ist und dafür sorgt, dass bei einem Bremsen mit Rekuperation der Druck in der Kammer 3 konstant bleibt, so dass der Fahrer am Bremspedal 27 keine diesen verunsichernden Rückwirkungen (Bremsdruckmodulationen) spürt. Die Steuereinrichtung 81 steuert den Elektromotor 46 solange an, bis der überschüssige Druck bzw. die überschüssige Hydraulikflüssigkeit in der Kammer 3 mittels der Leitung 41 an die Kammer 44 der Vorrichtung 40 abgegeben ist. Die Steuereinrichtung 81 kann den Elektromotor 46 kontinuierlich nachjustieren, um den Druck in der Kammer 3 konstant zu halten.

Wird die untere Rampe 53' in der Pfeilrichtung in Figur 4 nun soweit bewegt, bis die Kugel 51 in Eingriff mit der Mulde 56 steht (in Figur 4 gestrichelt angedeutet), weist die Kammer 44 ein maximales Volumen auf. Dadurch, dass eine selbsttätige Verstellung der Rampen 53, 53' hiernach aufgrund der Mulden 56 verhindert wird, kann auch in dieser zweiten Stellung des Kolbens 43 der Elektromotor 46 stromlos geschaltet werden, ohne dass Gefahr besteht, dass sich der Kolben 43 weiter verschiebt.

Wenn sich die Kugel 51 zwischen der Mulde 55 und der Mulde 57 befindet, gelangt diese im Falle eines Versagens des Elektromotors 46 in Eingriff mit der Mulde 57 und bewegt sich nicht bis zur Mulde 56 hin. Dadurch, dass somit nur ein Teilvolumen an Hydraulikflüssigkeit aus der Kammer 3 in der Vorrichtung 40 aufgenommen wird, wird vermieden, dass sich der Bremspedalweg übermäßig verlängert.

Obwohl die Erfindung vorliegend anhand bevorzugter Ausführungsbeispiele beschrieben wurde, ist sie darauf keineswegs beschränkt, sondern auf vielfältige Weise modifizierbar. Die für die erfindungsgemäße Vorrichtung beschriebenen Weiterbildungen und Ausführungsbeispiele gelten entsprechend für das erfindungsgemäße Bremssystem, und umgekehrt. Ferner sei darauf hingewiesen, dass "ein" vorliegend keine Vielzahl ausschließt.

## Patentansprüche

1. Vorrichtung (40) zum Aufnehmen und Abgeben von Hydraulikflüssigkeit, insbesondere für ein Hybrid- oder Elektrofahrzeug, aufweisend:
einen Zylinder (42) ;
einen Kolben (43), welcher für das Aufnehmen und Abgeben der Hydraulikflüssigkeit in dem Zylinder (42) bewegbar ist; und
eine Antriebseinrichtung (46);
**dadurch gekennzeichnet,**
**dass** ein Rampenmechanismus (47) vorgesehen ist, welcher wenigstens eine Rampe (53, 53') aufweist, auf der wenigstens ein Wälzkörper (51) für das Bewegen des Kolbens (43) abrollt, wobei der Rampenmechanismus (47) zwischen einer Stirnseite (62) des Kolbens (43) und einer Stirnseite (63) eines von der Antriebseinrichtung (46) angetriebenen Zahnrads (61) angeordnet ist.

2. Vorrichtung nach Anspruch 1, wobei die wenigstens eine Rampe (53, 53') einstückig mit dem Kolben (43) oder dem Zahnrad (61) gebildet ist.

3. Vorrichtung nach Anspruch 1 oder 2, wobei ein Paar (52) sich gegenüberliegende Rampen (53, 53') vorgesehen ist, wobei die eine Rampe (53) mit dem Kolben (43) und die andere Rampe (53') mit dem Zahnrad (61) verbunden ist.

4. Vorrichtung nach Anspruch 3, wobei zwei oder drei Paare (52) sich gegenüberliegender Rampen (53, 53') vorgesehen sind, wobei die Paare (52) um ca. 180 bzw. 120 Grad zueinander um eine Mittelachse (54) des Kolbens (43) versetzt sind.

5. Vorrichtung nach einem der vorangehenden Ansprüche, wobei die wenigstens eine Rampe (53, 53') wenigstens eine Mulde (55, 56, 57) für ein Ineingriffkommen mit dem wenigstens einen Wälzkörper (51) aufweist.

6. Vorrichtung nach Anspruch 5, wobei eine erste, zweite und/oder dritte Mulde (55, 57, 56) vorgesehen ist, wobei die erste Mulde (55) einer Stellung des Kolbens (43) entspricht, in welcher der Zylinder (42) im Wesentlichen entleert ist, wobei die zweite Mulde (57) einer Stellung des Kolbens (43) entspricht, in welcher der Zylinder (42) teilweise befüllt ist, und wobei die dritte Mulde (56) einer Stellung des Kolbens (43) entspricht, in welcher der Zylinder (42) im Wesentlichen gefüllt ist.

7. Vorrichtung nach einem der vorangehenden Ansprüche, wobei das Zahnrad (61) ein Scheibenelement (64) aus Metall und bevorzugt einen Zahnkranz (65) aus Kunststoff aufweist, wobei das Zahnrad (61) bevorzugt von der Antriebseinrichtung (46) mittels eines Schneckenrads (75), insbesondere aus Metall, angetrieben wird.

8. Vorrichtung nach einem der vorangehenden Ansprüche, wobei die Antriebseinrichtung (46) als ein Elektromotor ausgebildet ist und einen Rotorlagesensor (78) aufweist, um einen Befüllungsgrad des Zylinders (42) zu ermitteln.

9. Bremssystem (1) für ein Hybrid- oder Elektrofahrzeug, mit einer Vorrichtung (40) nach einem der vorhergehenden Ansprüche.

10. Bremssystem nach Anspruch 9, weiterhin aufweisend:
einen Hauptbremszylinder (2) mit einer Kammer (3), welche mit einem einer Achse (23) des Fahrzeugs zugeordneten Radbremszylinder (4, 5) zum Abbremsen eines Rads (21, 22) des Fahrzeugs hydraulisch verbunden ist, wobei die Achse (23) mit einem Generator (25) zum Erzeugen von elektrischem Strom für eine Rekuperation koppelbar ist;
wobei die Vorrichtung (40) mit der Kammer (3) direkt hydraulisch verbunden ist, um Hydraulikflüssigkeit aus der Kammer (3) aufzunehmen oder an diese abzugeben.

## Claims

1. Device (40) for receiving and dispensing hydraulic fluid, in particular for a hybrid or electric vehicle, having:
a cylinder (42);
a piston (43) which is movable in the cylinder (42) for the receiving and dispensing of the hydraulic fluid; and
a drive device (46);
**characterized**
**in that** a ramp mechanism (47) is provided which has at least one ramp (53, 53') on which at least one rolling body (51) rolls for the movement of the piston (43), wherein the ramp mechanism (47) is arranged between a face side (62) of the piston (43) and a face side (63) of a gearwheel (61) that is driven by the drive device (46).

2. Device according to Claim 1, wherein the at least one ramp (53, 53') is formed integrally with the piston (43) or with the gearwheel (61).

3. Device according to Claim 1 or 2, wherein a pair (52) of mutually opposite ramps (53, 53') is provided, wherein one ramp (53) is connected to the piston (43) and the other ramp (53') is connected to the gearwheel (61).

4. Device according to Claim 3, wherein two or three pairs (52) of mutually opposite ramps (53, 53') are provided, wherein the pairs (52) are offset relative to one another by approximately 180 or 120 degrees, respectively, about a central axis (54) of the piston (43).

5. Device according to one of the preceding claims, wherein the at least one ramp (53, 53') has at least one depression (55, 56, 57) for engagement with the at least one rolling body (51).

6. Device according to Claim 5, wherein a first, second and/or third depression (55, 57, 56) is provided, wherein the first depression (55) corresponds to a position of the piston (43), in which the cylinder (42) is substantially evacuated, wherein the second depression (57) corresponds to a position of the piston (43) in which the cylinder (42) is partially filled, and wherein the third depression (56) corresponds to a position of the piston (43) in which the cylinder (42) is substantially full.

7. Device according to one of the preceding claims, wherein the gearwheel (61) has a disc element (64) composed of metal and preferably a ring of teeth (65) composed of plastic, wherein the gearwheel (61) is preferably driven by the drive device (46) via a worm gear (75), which is composed in particular of metal.

8. Device according to one of the preceding claims, wherein the drive device (46) is in the form of an electric motor and has a rotor position sensor (78) for the purpose of determining a fill level of the cylinder (42).

9. Brake system (1) for a hybrid or electric vehicle, having a device (40) according to one of the preceding claims.

10. Brake system according to Claim 9, furthermore comprising:
a master brake cylinder (2) having a chamber (3) which is hydraulically connected to a wheel brake cylinder (4, 5), assigned to an axle (23) of the vehicle, for the purpose of braking a wheel (21, 22) of the vehicle, wherein the axle (23) can be coupled to a generator (25) for generating electrical current for recuperation purposes;
wherein the device (40) is directly hydraulically connected to the chamber (3) for the purpose of receiving hydraulic fluid from or dispensing hydraulic fluid to the chamber (3).

## Revendications

1. Dispositif (40) pour recevoir et distribuer un liquide hydraulique, en particulier pour un véhicule hybride ou électrique, comprenant :
un cylindre (42) ;
un piston (43), lequel peut être déplacé dans le cylindre (42) pour recevoir et distribuer le liquide hydraulique ; et
un dispositif d'entraînement (46) ;
**caractérisé**
**en ce qu'**un mécanisme à rampes (47) est prévu, lequel comprend au moins une rampe (53, 53') sur laquelle roule au moins un corps de roulement (51) pour le déplacement du piston (43), le mécanisme à rampes (47) étant disposé entre un côté frontal (62) du piston (43) et un côté frontal (63) d'une roue dentée (61) entraînée par le dispositif d'entraînement (46).

2. Dispositif selon la revendication 1, dans lequel l'au moins une rampe (53, 53') est formée d'un seul tenant avec le piston (43) ou avec un la roue dentée (61).

3. Dispositif selon la revendication 1 ou 2, dans lequel une paire (52) de rampes (53, 53') se faisant face est prévue, l'une des rampes (53) étant reliée au piston (43) et l'autre rampe (53') étant reliée à la roue dentée (61).

4. Dispositif selon la revendication 3, dans lequel deux ou trois paires (52) de rampes (53, 53') se faisant face sont prévues, et dans lequel les paires (52) sont décalées d'environ 180 ou 120 degrés les unes par rapport aux autres autour d'un axe médian (54) du piston (43).

5. Dispositif selon l'une quelconque des revendications précédentes, dans lequel l'au moins une rampe (53, 53') comprend au moins un évidement (55, 56, 57) pour une entrée en prise avec l'au moins un corps de roulement (51).

6. Dispositif selon la revendication 5, dans lequel un premier, un deuxième et/ou un troisième évidement (55, 57, 56) est/sont prévu(s), dans lequel le premier évidement (55) correspond à une position du piston (43) dans laquelle le cylindre (42) est essentiellement vidé, dans lequel le deuxième évidement (57) correspond à une position du piston (43) dans laquelle le cylindre (42) est partiellement rempli, et dans lequel le troisième évidement (56) correspond à une position du piston (43) dans laquelle le cylindre (42) est essentiellement rempli.

7. Dispositif selon l'une quelconque des revendications précédentes, dans lequel la roue dentée (61) comprend un élément de disque (64) en métal et de préférence une couronne dentée (65) en plastique, la roue dentée (61) étant de préférence entraînée par le dispositif d'entraînement (46) au moyen d'une roue à denture hélicoïdale (75), en particulier en métal.

8. Dispositif selon l'une quelconque des revendications précédentes, dans lequel le dispositif d'entraînement (46) est réalisé sous la forme d'un moteur électrique et comprend un capteur de position de rotor (78) afin de déterminer un degré de remplissage du cylindre (42).

9. Système de freinage (1) pour un véhicule hybride ou électrique, comprenant un dispositif (40) selon l'une quelconque des revendications précédentes.

10. Système de freinage selon la revendication 9, comprenant en outre :
un cylindre de frein principal (2) comprenant une chambre (3), laquelle est en liaison hydraulique avec un cylindre de frein de roue (4, 5) associé à un essieu (23) du véhicule pour freiner une roue (21, 22) du véhicule, dans lequel l'essieu (23) peut être accouplé à un générateur (25) pour générer du courant électrique pour une récupération ;
dans lequel le dispositif (40) est en liaison hydraulique directe avec la chambre (3) afin de recevoir du liquide hydraulique provenant de la chambre (3) ou de distribuer du liquide hydraulique à celle-ci.
